# EUROPÄISCHE PATENTSCHRIFT

(11) **EP 0 902 493 B1**
(45) Veröffentlichungstag und Bekanntmachung des Hinweises auf die Patenterteilung: **03.01.2001**
(21) Anmeldenummer: 97810647.4
(22) Anmeldetag: 11.09.1997
(51) Int. Cl.: H01M 8/12

(54) **Elektrochemisch aktives Element zu einer Festoxidbrennstoffzelle**
Elektrochemical active element for a solid oxide fuel cell
Elément électrochimique actif pour une pile à combustible à oxydes solides

(43) Veröffentlichungstag der Anmeldung: 17.03.1999
(73) Patentinhaber: Sulzer Hexis AG, 8400 Winterthur (CH)
(72) Erfinder: Batawi, Emad, Dr., 8400 Winterthur (CH)
(74) Vertreter: Sulzer Management AG

(56) Entgegenhaltungen:
- EP-A- 0 552 055
- EP-A- 0 593 281
- DE-A- 4 400 540
- DE-C- 4 237 519
- US-A- 3 522 103
- US-A- 5 500 307
- CHEMICAL ABSTRACTS, vol. 119, no. 10, 6.September 1993 Columbus, Ohio, US; abstract no. 99807, CHEN, C. C. ETA L: "cathode/electrolyte interactions and their expected impact on SOFC performance" XP000665278 & PROC. - ELECTROCHEM. SOC., Bd. 93, Nr. 4, 1993, Seiten 598-612,
- PATENT ABSTRACTS OF JAPAN vol. 015, no. 062 (E-1033), 14.Februar 1991 -& JP 02 288159 A (NGK INSULATORS LTD), 28.November 1990,
- PATENT ABSTRACTS OF JAPAN vol. 016, no. 238 (C-0946), 2.Juni 1992 -& JP 04 050155 A (AGENCY OF IND SCIENCE & TECHNOL;OTHERS: 01), 19.Februar 1992,
- PATENT ABSTRACTS OF JAPAN vol. 014, no. 550 (E-1009), 6.Dezember 1990 -& JP 02 236959 A (MITSUBISHI HEAVY IND LTD), 19.September 1990,
- PATENT ABSTRACTS OF JAPAN vol. 013, no. 496 (E-843), 9.November 1989 -& JP 01 200560 A (MITSUBISHI HEAVY IND LTD), 11.August 1989,
- EGUCHI K ET AL: "THE ACTIVATION AND TRANSFER OF OXYGEN AT ELECTROLYTE/CATHODE INTERFACE FOR SOFCS" PROCEEDINGS OF THE INTERNATIONAL SYMPOSIUM ON SOLID OXIDE FUEL CELL, ATHENS, JULY 2 - 5, 1991, Nr. SYMP. 2, 2.Juli 1991, GROSZ F;ZEGERS P; SINGHAL S C; YAMAMOTO O, Seiten 697-704, XP000546166
- PATENT ABSTRACTS OF JAPAN vol. 012, no. 291 (E-644), 9.August 1988 & JP 63 066859 A (AGENCY OF IND SCIENCE & TECHNOL;OTHERS: 01), 25.März 1988,

## Beschreibung

Die Erfindung betrifft ein elektrochemisch aktives Element zu einer Hochtemperaturbrennstoffzelle gemäss Oberbegriff von Anspruch 1 sowie eine Brennstoffzellenbatterie.

Es sind Hochtemperaturbrennstoffzellen bekannt - siehe beispielsweise die EP-A 0 714 147 (= P.6651) -, bei welchen das elektrochemisch aktive Element, das sogenannte PEN, als eine selbstragende Platte ausgebildet ist, die allerdings sehr dünn und ausserordentlich zerbrechlich ist. Das PEN besteht aus einer positiven Elektrode (P), einem Elektrolyten (E) und einer negativen Elektrode (N). Die positive Elektrode oder Kathode ist luftseitig angeordnet, die negative Elektrode oder Anode gasseitig. Das PEN ist ein separat in die Brennstoffzellenbatterie einbaubares Element. Wegen seiner Zerbrechlichkeit ist der Zusammenbau der Batterie schwierig.

Der Elektrolyt, der bei der Betriebstemperatur von rund 900°C Sauerstoffionen leitet, besteht aus stabilisiertem Zirkoniumoxid (ZrO₂), dem zur Verbesserung der Beweglichkeit der Sauerstoffionen weitere Stoffe zugemischt sind, nämlich beispielsweise 3 bis 12 ^{mol}/ₒ (Mol-Prozent) Y₂O₃. Man kann auch Al₂O₃ (2 bis 20 ^{mol}/ₒ) zugeben, um eine grössere Festigkeit der Elektrolytschicht zu erhalten.

Die Elektroden werden auf die Elektrolytschicht durch Aufsintern von Pulvergemischen aufgebracht, zuerst die Anode bei einer Sintertemperatur von rund 1250 - 1450°C, dann die Kathode bei einer tieferen Sintertemperatur (1100 - 1300°C). Durch den Einfluss der hohen Temperatur beim Sintern des Anodenmaterials findet in der Elektrolytschicht ein Kornwachstum statt, wodurch diese Schicht spröder und zerbrechlicher wird. Beim Zusammenbau der Batterie muss daher besonders vorsichtig vorgegangen werden. Es können sich auch während des Betriebs Risse im PEN bilden, insbesondere wenn bei widerholten Betriebsunterbrüchen die Temperatur erniedrigt und anschliessend wieder erhöht wird.

Es ist Aufgabe der Erfindung, ein elektrochemisch aktives Element zu einer Hochtemperaturbrennstoffzelle zu schaffen, das weniger zerbrechlich ist als die bekannten PEN. Diese Aufgabe wird durch das in Anspruch 1 definierte Element gelöst.

Das elektrochemisch aktive Element (1) zu einer Hochtemperaturbrennstoffzelle ist schichtförmig ausgebildet und umfasst eine Anoden-, eine Kathoden- sowie eine dazwischenliegende Elektrolytschicht. Der Elektrolyt ist ein keramisches Material aus mit Yttrium Y stabilisiertem Zirkoniumoxid ZrO₂, das zusätzlich Aluminiumoxid Al₂O₃ enthalten kann. Die Anode ist aus einem Pulvergemisch durch Sintern auf der Elektrolytschicht hergestellt. Dieses Anodengemisch enthält Oxide NiO sowie CeO₂ und kann ein Oxid des Typs A₂O₃ enthalten, mit beispielsweise A = Sm, Y, Gd und/oder Pr. Erfindungsgemäss ist dem Anodengemisch 0.5 - 5 ^{mol}/ₒ CoO, FeO und/oder MnO zugegeben, um die Sintertemperatur des Gemisches zu erniedrigen.

Dank der Erniedrigung der Sintertemperatur bei der Anodenherstellung aufgrund der erfindungsgemässen Massnahme ist das Kristallwachstum in dem Elektrolyten weniger stark ausgeprägt, so dass die ursprüngliche Festigkeit der Elektrolytschicht weitgehend erhalten bleibt.

Die abhängigen Ansprüche 2 bis 10 beziehen sich auf vorteilhafte Ausführungsformen des erfindungsgemässen Elements. Gegenstand des Anspruchs 11 ist eine Brennstoffzellenbatterie mit erfindungsgemässen Elementen.

Nachfolgend wird die Erfindung anhand der Zeichnungen erläutert. Es zeigen:
- Fig. 1: einen Ausschnitt aus einer erfindungsgemässen Brennstoffzellenbatterie und
- Fig. 2: eine schematische Darstellung eines Querschnitts durch ein elektrochemisch aktives Element gemäss der Erfindung.

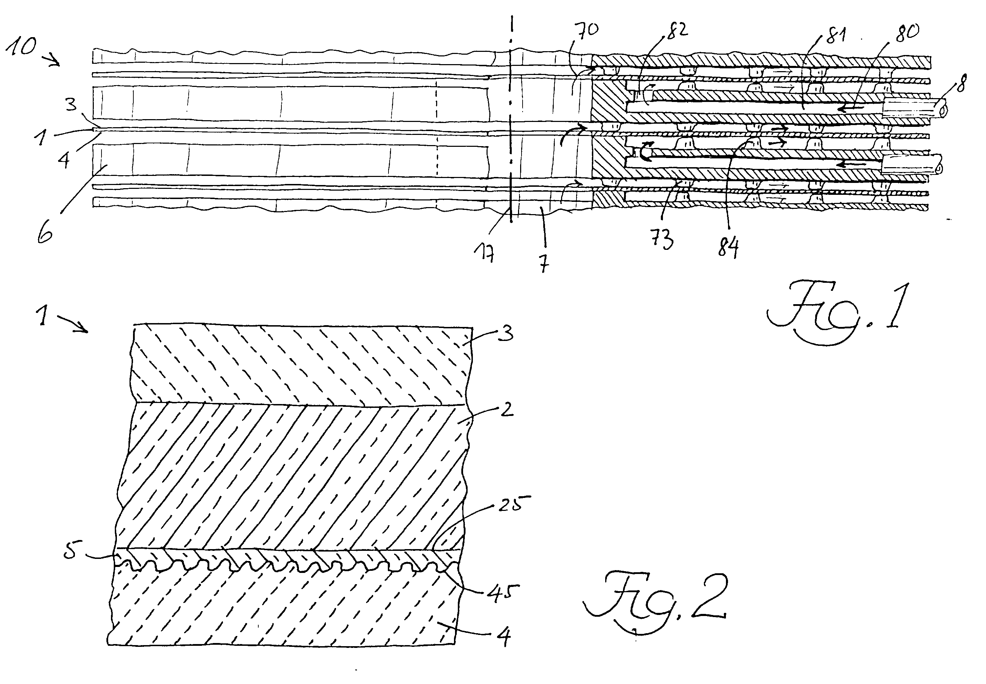

Die in Fig.1 dargestellte Brennstoffzellenbatterie 10 - links als Seitenansicht, rechts als Querschnitt - umfasst eine Mehrzahl von PEN 1 zusammen mit planaren Gas- und Luftzufuhrelementen 6. Die Batterie 10 ist im wesentlichen zentralsymmetrisch ausgebildet, mit einer Achse 17 im Zentrum. Die separierbaren Elemente 1 und 6 sind in alternierender Abfolge stapelartig angeordnet und stehen miteinander in elektrischem Kontakt, wobei Kontaktstellen in einer grossen Anzahl gleichmässig über die gesamten Elektrodenbereiche verteilt sind.

Ein gasförmiger Brennstoff 70 wird über einen zentralen Kanal 7, der sich längs der Stapelachse 17 erstreckt, und über die einzelnen Gas- und Luftzufuhrelemente 6 den Anoden 3 zugeleitet. Luft 80 wird über Einlassrohre 8 an der Stapelperipherie in spaltförmige Kammern 81 eingespeist. Nach einer Vorerhitzung in diesen Kammern 81 gelangt die Luft über Durchgangsöffnungen 82 ebenfalls zentral zur Kathode 4, wo sie parallel zum Gas 70 zur Peripherie zurückströmt. Die Seiten der Gas- und Luftzufuhrelemente 6, die den Elektroden 3 und 4 zugewandt sind, sind mit Erhebungen 73 bzw. 84 versehen, die elektrische Kontaktstellen auf den Elektroden bilden. Die Gas- und Luftzufuhrelemente 6 sind aus einem metallischen Werkstoff, so dass ein Strom aufgrund der in den einzelnen PEN erzeugten Spannungen in Richtung der Stapelachse 17 fliessen kann.

Der Aufbau eines planar ausgebildeten PEN ist in Fig.2 gezeigt: Anode 3, Elektrolyt 2, Kathode 4, sowie eine Zwischenschicht 5, die nicht notwendigerweise vorhanden sein muss. Durch diese Schicht 5, die zwischen der Elektrolytschicht 2 und der Kathodenschicht 4 angeordnet ist, ist eine Reduktion von Polarisationseffekten bewirkbar, indem nämlich sowohl eine Elektronen- als auch eine Ionenleitung gefördert wird. Ferner kann mit der Zwischenschicht auch die Langzeitstabilität des PEN verbessert werden, da sie beim Sintern der Kathode 4 als Diffusionsbarriere der Ausbildung ungünstiger Phasen entgegenwirkt.

Der Auftrag der Pulvergemische bei der Herstellung der Elektroden kann mittels einer Siebdrucktechnik ausgeführt werden. Dabei werden die Partikel des Pulvers mit Binde-, Netz- und Lösungsmittel zu einem fliessfähigen Gemisch vermengt. Es kann vorteilhaft sein, wenn beispielsweise zur Beeinflussung der Viskosität noch weitere Stoffe wie z.B. Wachse hinzugefügt werden.

Die Dicke der Elektrolytschicht 2 beträgt rund 100 - 300 µm. Die Anoden- und Kathodenschicht 3 bzw. 4 weisen Dicken von jeweils rund 30 µm auf. Für die Zwischenschicht 5 ist eine Dicke mit einem Mittelwert zwischen rund 1 und 5 µm vorgesehen. Diese Dicke variiert im Mikrometerbereich stark, so dass die Grenzfläche 45 zur Kathodenschicht 4 wesentlich grösser ist als die Grenzfläche 25 zur Elektrolytschicht 2.

Das Pulvergemisch der Anode 3 enthält Oxide NiO und CeO₂ sowie ein Oxid des Typs A₂O₃, mit beispielsweise A = Sm (Samarium), Y (Yttrium), Gd (Gadolinium) und/oder Pr (Praseodymium). Erfindungsgemäss ist diesem Anodengemisch zusätzlich 0.5 - 5 ^{mol}/ₒ CoO, FeO und/oder MnO zugegeben, um die Sintertemperatur des Gemisches zu erniedrigen. Diese Temperatur lässt sich mit den genannten Stoffen um mindestens 100 K herabsetzten.

Im Anodengemisch kann die Komponente NiO teilweise durch RuO₂ substituiert sein, wobei der Anteil dieser Komponente mit Vorteil rund 60 - 80 ^{wt}/ₒ (Gewichtsprozent) beträgt. Dieser Stoff ist dann vorgesehen, wenn durch die Anode 3 eine Reformierung von Methan erfolgen soll (Umwandlung von CH₄ in CO und H₂ bei Anwesenheit von H₂O im Brenngas).

Im Anodengemisch ist das Oxid des Typs A₂O₃ zu rund 10 bis 20 ^{mol}/ₒ enthalten, während der Rest neben NiO und gegebenenfalls RuO₂ aus CeO₂ sowie CoO, FeO und/oder MnO besteht.

Das Stoffgemisch der Kathode 4 weist folgende Zusammensetzung auf: (Ln_{1-w}E_{w}) (G_{1-z}J_{z}) O₃, wobei
Ln ein Lanthanid ist, beispielsweise Y, La oder Pr, vorzugsweise Pr,
E ein Erdalkalimetall ist, beispielsweise Mg, Ca oder Sr, vorzugsweise Sr,
G ein Übergangsmetall ist, beispielsweise Cr, Mn, Fe, Co oder Ni, vorzugsweise Mn, und
J ein zweites, nicht mit G identisches Übergangsmetall ist, vorzugsweise Co, und wobei ferner
w grösser als 0.1, kleiner als 0.5, vorzugsweise 0.4, ist sowie
z grösser als 0.01, kleiner als 0.5, vorzugsweise 0.02, ist.

Das Kathodengemisch kann zu 10 - 30 ^{wt}/ₒ durch teilweise oder voll stabilisiertes ZrO₂ substituiert sein. Die im Kathodengemisch enthaltenen Metalle, beispielsweise Pr, Sr, Mn und Co, können als Salze von organischen Stoffen, insbesondere von Acetat, in das Pulvergemisch eingebracht werden. Eine Umwandlung der Metalle in Metalloxide unter gleichzeitiger Eliminierung der organischen Stoffe ist bei der Inbetriebnahme der Brennstoffzelle vorgesehen, nämlich bei der Erhitzung auf die Betriebstemperatur und unter der Einwirkung von Luftsauerstoff. Als Mittel zur katalytischen Beschleunigung der Kathodenreaktion können auch Salze von Edelmetallen, insbesondere Palladiumazetat, dem Kathodengemisch zugegeben werden.

Die Zwischenschicht besteht überwiegend aus einem keramischen Material, das einerseits CeO enthält und andererseits ein Oxid des A₂O₃-Typs - wie bereits das Anodengemisch. Diesem Material sind zur Erniedrigung der Sintertemperatur die gleichen Stoffe wie dem Anodengemisch hinzugefügt, nämlich CoO, FeO und/oder MnO, so dass eine Zusammensetzung mit folgender Formel vorliegt:

Ce_{1-x-y}AₓD_{y}O_{2±δ},

wobei
A eines der Elemente Y, Pr, Sm und/oder Gd ist,
D eines der Elemente Fe, Co und/oder Mn ist und wobei ferner
x grösser als 0.1, kleiner als 0.4 ist,
y grösser als 0.005, kleiner als 0.05 ist sowie
δ eine kleine Zahl in der Grössenordnung von 0.1 ist.

Ein PEN mit einer der oben angegebenen Zusammensetzungen kann auch gekrümmt statt planar sein, beispielsweise rohrförmig.

## Patentansprüche

1. Elektrochemisch aktives Element (1) zu einer Hochtemperaturbrennstoffzelle, das schichtförmig ausgebildet ist und eine Anoden- (3), eine Kathoden-(4) sowie eine dazwischenliegende Elektrolytschicht (2) umfasst, wobei
- der Elektrolyt ein keramisches Material aus mit Yttrium Y stabilisiertem Zirkoniumoxid ZrO₂ ist, das zusätzlich Aluminiumoxid Al₂O₃ enthalten kann,
- die Anode aus einem Pulvergemisch durch Sintern auf der Elektrolytschicht hergestellt ist
- und dieses Anodengemisch Oxide NiO sowie CeO₂ enthält und ein Oxid des Typs A₂O₃ enthalten kann, mit beispielsweise A = Sm, Y, Gd und/oder Pr,
dadurch gekennzeichnet, dass dem Anodengemisch 0.5
- 5 ^{mol}/ₒ CoO, FeO und/oder MnO zugegeben ist, um die Sintertemperatur des Gemisches zu erniedrigen.

2. Element nach Anspruch 1, dadurch gekennzeichnet, dass im Anodengemisch die Komponente NiO teilweise durch RuO₂ substituiert sein kann und der Anteil dieser Komponente 60 - 80 ^{wt}/ₒ beträgt.

3. Element nach Anspruch 2, dadurch gekennzeichnet, dass im Anodengemisch das Oxid des Typs A₂O₃ mit höchstens 20 ^{mol}/ₒ enthalten ist, während der Rest neben NiO und gegebenenfalls RuO₂ aus CeO₂ sowie CoO, FeO und/oder MnO besteht.

4. Element nach einem der Ansprüche 1 bis 3, dadurch gekennzeichnet, dass die Kathode (4) aus einem Pulvergemisch durch Sintern hergestellt ist und dass dieses Kathodengemisch folgende Zusammensetzung aufweist: (Ln_{1-w}E_{w})(G_{1-z}J_{z})O₃, wobei
Ln ein Lanthanid ist, beispielsweise Y, La oder Pr, vorzugsweise Pr,
E ein Erdalkalimetall ist, beispielsweise Mg, Ca oder Sr, vorzugsweise Sr,
G ein Übergangsmetall ist, beispielsweise Cr, Mn, Fe, Co oder Ni, vorzugsweise Mn, und
J ein zweites, nicht mit G identisches Übergangsmetall ist, vorzugsweise Co, und wobei ferner
w grösser als 0.1, kleiner als 0.5, vorzugsweise 0.4, ist sowie
z grösser als 0.01, kleiner als 0.5, vorzugsweise 0.02, ist.

5. Element nach Anspruch 4, dadurch gekennzeichnet, dass 10 - 30 ^{wt}/ₒ des Kathodengemisches durch teilweise oder voll stabilisiertes ZrO₂ substituiert ist.

6. Element nach Anspruch 4 oder 5, dadurch gekennzeichnet, dass die im Kathodengemisch enthaltenen Metalle, beispielsweise Pr, Sr, Mn und Co, als Salze von organischen Stoffen, insbesondere von Acetat in das Pulvergemisch eingebracht sind, und dass eine Umwandlung der Metalle in Metalloxide unter gleichzeitiger Eliminierung der organischen Stoffe bei der Inbetriebnahme der Brennstoffzelle unter der Einwirkung von Luftsauerstoff vorgesehen ist.

7. Element nach einem der Ansprüche 4 bis 6, dadurch gekennzeichnet, dass zwischen der Elektrolytschicht (2) und der Kathodenschicht (4) eine Zwischenschicht (5) angeordnet ist, durch die eine Reduktion von Polarisationseffekten bewirkbar ist.

8. Element nach Anspruch 7, dadurch gekennzeichnet, dass die Zwischenschicht (5) überwiegend aus einem keramischen Material besteht, das einerseits CeO₂ enthält und andererseits ein Oxid des A₂O₃-Typs wie bereits das Anodengemisch, welchem Material zur Erniedrigung der Sintertemperatur die gleichen Stoffe wie dem Anodengemisch hinzugefügt sind, nämlich CoO, FeO und/oder MnO, so dass eine Zusammensetzung mit folgender Formel vorliegt:
Ce_{1-x-y}AₓD_{y}O_{2±δ} ,
wobei
A eines der Elemente Y, Pr, Sm und/oder Gd ist,
D eines der Elemente Fe, Co und/oder Mn ist und wobei ferner
x grösser als 0.1, kleiner als 0.4 ist,
y grösser als 0.005, kleiner als 0.05 ist sowie
δ eine kleine Zahl in der Grössenordnung von 0.1 ist.

9. Element nach Anspruch 8, dadurch gekennzeichnet, dass die Zwischenschicht (5) eine Dicke mit einem Mittelwert zwischen 1 und 5 µm aufweist, dass diese Dicke im Mikrometerbereich stark variiert, so dass die Grenzfläche zur Kathodenschicht (4) wesentlich grösser als die Grenzfläche zur Elektrolytschicht ist.

10. Element nach einem der Ansprüche 1 bis 9, dadurch gekennzeichnet, dass es planar ausgebildet ist, dass die Dicke der Elektrolytschicht (2) 100 - 300 µm beträgt und die Anoden- und Kathodenschichten (3, 4) Dicken von jeweils 30 µm aufweisen.

11. Brennstoffzellenbatterie (10) mit elektrochemisch aktiven Elementen (1) gemäss Anspruch 10, dadurch gekennzeichnet, dass eine Mehrzahl der genannten Elemente zusammen mit planaren Gas- und Luftzufuhrelementen (6) stapelartig angeordnet sind, wobei die einzelnen Elemente (1, 6) separierbar miteinander in Kontakt stehen.

## Claims

1. Electrochemically active element (1) for a high temperature fuel cell which is designed in layers and comprises an anode layer (3), a cathode layer (4) and an electrolyte layer (2) which is arranged therebetween, with
- the electrolyte being a ceramic material of zirconium oxide ZrO₂ stabilised with yttrium Y and which can additionally contain aluminium oxide Al₂O₃,
- the anode being manufactured from a power mixture through sintering on the electrolyte layer,
- and this anode mixture containing the oxides NiO and CeO₂ and with it being possible for it to contain an oxide of the type A₂O₃, with for example A = Sm, Y, Gd and/or Pr,
characterised in that 0.5 - 5 ^{mol}/ₒ CoO, FeO and/or MnO is or are added to the anode mixture in order to lower the sintering temperature of the mixture.

2. Element in accordance with claim 1 characterised in that in the anode mixture the component NiO can be partially substituted by RuO₂ and that the proportion of this component amounts to 60 - 80 ^{wt}/ₒ.

3. Element in accordance with claim 2 characterised in that the oxide of the type A₂O₃ is contained in the anode mixture with at most 20 ^{mol}/ₒ, whereas the remainder consists of CeO₂ and CoO, FeO and/or MnO in addition to NiO and optionally RuO₂.

4. Element in accordance with one of the claims 1 to 3 characterised in that the cathode (4) is manufactured from a powder mixture through sintering; and in that this cathode mixture has the following composition: (Ln_{1-w}E_{w})(G_{1-z}J_{z})O₃, with
Ln being a lanthanide, for example Y, La or Pr, preferably Pr,
E being an alkaline earth metal, for example Mg, Ca or Sr, preferably Sr,
G being a transition metal, for example Cr, Mn, Fe, Co or Ni, preferably Mn, and
J being a second transition metal not identical to G, preferably Co,
and furthermore with
w being greater than 0.1 and less than 0.5, preferably 0.4, and
z being greater than 0.01 and less than 0.5, preferably 0.02.

5. Element in accordance with claim 4 characterised in that 10 - 30 ^{wt}/ₒ of the cathode mixture is substituted by partially or fully stabilised ZrO₂.

6. Element in accordance with claim 4 or 5 characterised in that the metals contained in the cathode mixture, for example Pr, Sr, Mn and Co, are introduced into the powder mixture as salts of organic substances, in particular of acetate; and in that a conversion of the metals into metal oxides under the action of atmospheric oxygen with a simultaneous elimination of the organic matter is provided when the fuel cell is put into operation.

7. Element in accordance with one of the claims 4 to 6 characterised in that an intermediate layer (5) through which a reduction of the polarisation effects can be produced is arranged between the electrolyte layer (2) and the cathode layer (4).

8. Element in accordance with claim 7 characterised in that the intermediate layer (5) consists predominantly of a ceramic material which contains, on the one hand, CeO and, on the other hand, an oxide of the A₂O₃ type such as was already the case for the anode mixture, to which material the same substances are added as to the anode mixture for the lowering of the sintering temperature, namely CoO, FeO and/or MnO, so that a composition with the following formula is present:
Ce_{1-x-y}AₓD_{y}O_{2±δ},
with
A being one of the elements Y, Pr, Sm, and/or Gd,
D being one of the elements Fe, Co, and/or Mn and furthermore with
x being greater than 0.1 and less than 0.4,
y being greater than 0.005 and less than 0.05 and
δ being a small number on the order of magnitude of 0.1.

9. Element in accordance with claim 8 characterised in that the intermediate layer (5) has a thickness with an average value between 1 and 5 µm; and in that this thickness varies strongly in the micron range so that the boundary surface of the cathode layer (4) is substantially larger than the boundary surface of the electrolyte layer.

10. Element in accordance with one of the claims 1 to 9 characterised in that it is of planar design; in that the thickness of the electrolyte layer (2) is 100 - 300 µm; and in that the anode and cathode layers (3, 4) each have thicknesses of 30 µm.

11. Fuel cell battery (10) with electrochemically active elements (1) in accordance with claim 10 characterised in that a majority of the named elements are arranged together with planar gas and air supply elements (6) in the form of a stack, with the individual elements (1, 6) being separably in contact with one another.

## Revendications

1. Elément électrochimique actif (1) pour une pile à combustible à haute température qui est configuré en couches et contient une couche d'anode (3), une couche de cathode (4) ainsi qu'une couche d'électrolyte (2) se trouvant entre, où
- l'électrolyte est une matière céramique d'oxyde de zirconium ZrO₂ stabilisé avec de l'yttrium Y qui peut contenir de plus de l'oxyde d'aluminium Al₂O₃,
- l'anode est produite à partir d'un mélange en poudre par frittage sur la couche d'électrolyte
- et ce mélange d'anode contient de l'oxyde NiO ainsi que CO₂ et peut contenir un oxyde du type A₂O₃, avec par exemple A = Sm, Y, Gd et/ou Pr,
caractérisé en ce que le mélange d'anode est additionné de 0,5-5% en moles CoO, FeO et/ou MnO pour abaisser la température de frittage du mélange.

2. Elément selon la revendication 1, caractérisé en ce que dans le mélange d'anode, le composant NiO peut être partiellement substitué par RuO₂ et la proportion de ce composant est de 60 à 80% en poids.

3. Elément selon la revendication 2, caractérisé en ce que dans le mélange d'anode, l'oxyde du type A₂O₃ est contenu au plus à 20% en moles tandis que le reste, outre NiO et, le cas échéant, RuO₂, se compose de CeO₂ ainsi que CoO, FeO et/ou MnO.

4. Elément selon l'une des revendications 1 à 3, caractérisé en ce que la cathode (4) est produite à partir d'un mélange en poudre, par frittage, et en ce que ce mélange de cathode présente la composition suivante (Ln_{1-w}E_{w}) (G_{1-z}J_{z})O₃, où
Ln est un lanthanide, par exemple, Y, La ou Pr, avantageusement Pr,
E est un métal alcalino-terreux, par exemple, Mg, Ca ou Sr, avantageusement Sr,
G est un métal de transition, par exemple, Cr, Mn, Fe, Co ou Ni, avantageusement Mn et
J est un second métal de transition qui n'est pas identique à G, avantageusement Co, et avantageusement de plus
w est plus grand que 0,1, plus petit que 0,5, avantageusement est de 0,4 et
z est plus grand que 0,01, plus petit que 0,5 avantageusement de 0,02.

5. Elément selon la revendication 4, caractérisé en ce que 10-30% en poids du mélange de cathode est substitué par ZrO₂ partiellement ou totalement stabilisé.

6. Elément selon la revendication 4 ou 5, caractérisé en ce que les métaux contenus dans le mélange de cathode, par exemple Pr, Sr, Mn et Co, sont introduits sous la forme de sels de matières organiques, en particulier d'acétate dans le mélange en poudre et en ce qu'une transformation des métaux en oxydes de métaux est prévue avec élimination simultanée des matières organiques lors de la mise en fonctionnement de la pile à combustible sous l'effet de l'oxygène de l'air.

7. Elément selon l'une des revendications 4 à 6, caractérisé en ce qu'entre la couche d'électrolyte (2) et la couche de cathode (4) est agencée une couche intermédiaire (5) par laquelle peut s'effectuer une réduction des effets de la polarisation.

8. Elément selon la revendication 7, caractérisé en ce que la couche intermédiaire (5) se compose principalement d'une matière céramique qui contient d'une part CeO₂ et d'autre part un oxyde du type A₂O₃, comme déjà le mélange d'anode, matière à laquelle sont ajoutés, pour abaisser la température de frittage, les mêmes matières que dans le mélange d'anode c'est-à-dire CoO, FeO et/ou MnO de façon qu'il y ait une composition de la formule suivante :
Ce_{1-x-y}AₓD_{y}O_{2±δ},
où
A est l'un des éléments Y, Pr, Sm et/ou Gd,
D est un des éléments Fe, Co et/ou Mn et de plus
x est plus grand que 0,1, plus petit que 0,4,
y est plus grand que 0,005, plus petit que 0,05 et
δ est un petit nombre de l'ordre de grandeur de 0,1.

9. Elément selon la revendication 8, caractérisé en ce que la couche intermédiaire (5) présente une épaisseur avec une valeur moyenne entre 1 et 5 µm, en ce que cette épaisseur varie fortement dans la plage du micron donc la surface limite pour la couche de cathode (4) est considérablement plus grande que la surface limite pour la couche d'électrolyte.

10. Elément selon l'une des revendications 1 à 9, caractérisé en ce qu'il est de forme plane, en ce que l'épaisseur de la couche d'électrolyte (2) est de 100-300 µm et en ce que les couches d'anode (3, 4) ont à chaque fois des épaisseurs de 30 µm.

11. Batterie de piles à combustible (10) avec éléments électrochimiques actifs (1) selon la revendication 10, caractérisé en ce qu'un certain nombre desdits éléments sont agencés en étant empilés avec des éléments plans d'alimentation en gaz et en air, et les éléments individuels (1, 6) sont en contact séparable les uns avec les autres.
